# EUROPEAN PATENT SPECIFICATION

(11) **EP 1 379 062 B1**
(45) Date of publication and mention of the grant of the patent: **08.11.2006**
(21) Application number: 03014610.4
(22) Date of filing: 26.06.2003
(51) Int. Cl.: H04M 1/725, H04M 1/02, H04N 7/14

(54) **Mobile terminal unit with improved operability in viewing mail**
Mobiles Endgerät mit verbesserter Bedienbarkeit zum Ansehen von Nachrichten
Terminal mobile avec un fonctionnement amélioré pour la visualisation de courrier

(30) Priority: 01.07.2002 JP 2002191858
(43) Date of publication of application: 07.01.2004
(73) Proprietor: SHARP KABUSHIKI KAISHA, Osaka-shi Osaka (JP)
(72) Inventor: Miyata, Yusuke, Higashihiroshima-shi, Hiroshima (JP); Okuda, Kei, Higashihiroshima-shi, Hiroshima (JP)
(74) Representative: Müller - Hoffmann & Partner

(56) References cited:
- US-A- 6 125 286
- US-A1- 2002 037 754
- NTT DOCOMO - SH251I, [Online] 28 May 2002 (2002-05-28), XP002309490 Retrieved from the Internet: URL:http://www.nttdocomo.co.jp/english/p_s /products/keitai/251i/sh251i/sh251i.html> [retrieved on 2004-12-07]
- NTT DOCOMO: "NTT DoCoMo unveils i-shot service for new camera-equipped mobile phone model" NTT DOCOMO PRESS RELEASE, 28 May 2002 (2002-05-28), XP002282953
- PATENT ABSTRACTS OF JAPAN vol. 2000, no. 12, 3 January 2001 (2001-01-03) & JP 2000 253113 A (HITACHI LTD), 14 September 2000 (2000-09-14) & US 6 466 202 B1 (MARUYAMA YUKINOBU ET AL) 15 October 2002 (2002-10-15)

## Description

### BACKGROUND OF THE INVENTION

### Field of the Invention

The present invention relates to a mobile terminal unit configured to be foldable and provided with display devices on an inner side and an outer side thereof when it is folded, and more particularly to a mobile terminal unit displaying an unread mail with its title on the display device located on the outer side thereof when it is folded, in receiving a mail with a foldable mobile phone or the like.

### Description of the Background Art

A foldable mobile phone with a camera includes displays on an inner face and an outer face thereof when it is folded. In many cases, the display on the inner face has a relatively large size, serving as a main display.

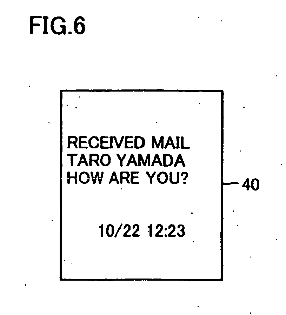

The display disposed on the outer face of the foldable mobile phone with the camera is visible from a user when the mobile phone is folded, and is used for a variety of applications. One example is to display an indication of mail reception. For mails from a sender who has been registered in advance, conventionally, a technique to display an indication of mail reception from that sender, as well as an extracted portion of the mail, that is, the sender's name and the title of the mail, for example, on a display 40 arranged on the outer face as shown in Fig. 6 has been proposed.

On the other hand, with such a proposed technique, operations such as unfolding the foldable mobile phone, then selecting a mode of handling the mail, and then opening a mail box have been necessary to view a body of the mail.

Further information pertaining to the prior art can be found in US patent application publication 2002/0037754 which discloses a mobile terminal unit that appears to comprise the features recited in the preamble of claim 1. Specifically, it discloses a folding-type communication terminal that includes first display means positioned so as to be visible when a main body of the communication terminal is in a folded state, second display means positioned so as to be concealed when the main body is in the folded state, storage means for storing at least one set of a piece of first information and a piece of second information, detection means for detecting that the main body has been put into an unfolded state, first display control means for having the piece of first information displayed on the first display means; and second display control means for having the piece of second information displayed on the second display means, when the detection means detects that the main body has been put into the unfolded state while the piece of first information is being displayed on the first display means, wherein the piece of second information belongs to a same set as the piece of first information.

Document NTT DOCOMO - SH2511, [online] May 28^{th}, 2002, XP002309490, as retrieved by the EPO from the internet on December 7^{th}, 2004 from URL: http://www.nttdocomo.co.jp/english/p_s/products/keitai/251i/sh251i/sh251i.html discloses a foldable cell phone with a primary, interior display as well as an exterior sub-display. The cell phone includes a CCD camera adjacent to the sub-display that can act as a viewfinder.

### SUMMARY OF THE INVENTION

An object of the present invention is to provide a mobile terminal unit with improved operability and usefulness, capable of saving a user's operation for viewing a body of a mail.

The present invention provides a mobile terminal unit in accordance with independent claim 1. Preferred embodiments of the invention are reflected in the dependent claims.

The claimed invention can be better understood in view of the embodiments of a mobile terminal unit described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention *per se.* This also holds for the subsequent "Brief Description of the Drawings" as well as the "Description of the Preferred Embodiments."

A preferred embodiment provides a mobile terminal unit configured to be foldable, which includes a first display portion, a second display portion, a detecting portion, and a control portion.

The first display portion is arranged so as to be located on an inner side of the mobile terminal unit when it is folded. The second display portion is arranged so as to be located on an outer side of the mobile terminal unit when it is folded. The detecting portion detects whether the mobile terminal unit is folded or not. The control portion causes an unread mail with its title to be displayed on the second display portion in response to reception of a mail while a folded state of the mobile terminal unit is detected, and causes the body of the mail to be displayed on the first display portion when an unfolded state of the mobile terminal unit is detected while the unread mail is being displayed on the second display portion.

Preferably, the mobile terminal unit further includes an external operation key arranged so as to be located on the outer side of the mobile terminal unit when it is folded.

The control portion causes the body of the mail to be displayed on the second display portion in response to an operation of the external operation key while the unread mail with its title is being displayed on the second display portion.

Preferably, the mobile terminal unit further includes an image pick-up portion arranged so as to be located on the outer side of the mobile terminal unit when it is folded, and a memory storing data.

The control portion causes an image picked up by the image pick-up portion to be displayed on the second display portion while the folded state of the mobile terminal unit is detected, and causes data of the image to be stored in the memory in response to an operation of the external operation key while the image is being displayed on the second display portion.

Preferably, the mobile terminal unit further includes an image pick-up portion arranged so as to be located on the outer side of the mobile terminal unit when it is folded.

The control portion causes an image picked up by the image pick-up portion to be displayed on the first display portion while the unfolded state of the mobile terminal unit is detected, and causes the image to be displayed on the second display portion while the folded state of the mobile terminal unit is detected.

According to another aspect of the present invention, a mobile terminal unit configured to be foldable includes a first display portion, a second display portion, an image pick-up portion, a detecting portion, and a control portion.

The first display portion is arranged so as to be located on an inner side of the mobile terminal unit when it is folded. The second display portion is arranged so as to be located on an outer side of the mobile terminal unit when it is folded. The image pick-up portion is arranged on a plane identical to a plane where the second display portion is disposed. The detecting portion detects whether the mobile terminal unit is folded or not. The control portion causes an image picked up by the image pick-up portion to be displayed on the second display portion when the detecting portion detects a folded state of the mobile terminal unit. The control portion, in response to reception of a mail, causes an indication of the reception to be displayed on the second display portion.

Preferably, the mobile terminal unit further includes an external operation key arranged so as to be located on the outer side of the mobile terminal unit when it is folded, and a memory storing data.

The control portion causes image data from the image pick-up portion to be stored in the memory in response to an operation of the external operation key while the image is being displayed on the second display portion.

Preferably, the control portion causes an unread mail with its title to be displayed on the second display portion in response to an operation of the external operation key while the indication of the reception is being displayed on the second display portion.

Preferably, the control portion causes the body of the mail to be displayed on the second display portion in response to an operation of the external operation key while the unread mail with its title is being displayed on the second display portion.

Preferably, the control portion causes the body of the mail to be displayed on the first display portion when the detecting portion detects that the mobile terminal unit is unfolded while the unread mail with its title is being displayed on the second display portion.

Preferably, the control portion causes an image picked up by the image pick-up portion to be displayed on the first display portion when the detecting portion detects that the mobile terminal unit is unfolded.

Preferably, the mobile terminal unit further includes a shutter button arranged so as to be located on the inner side of the mobile terminal unit when it is folded, an external operation key arranged so as to be located on the outer side of the mobile terminal unit when it is folded, and a memory storing data.

The control portion activates the shutter button when the detecting portion detects an unfolded state of the mobile terminal unit, activates the external operation key when the detecting portion detects a folded state of the mobile terminal unit, and causes image data from the image pick-up portion to be stored in the memory in response to the operation of the shutter button or the external operation key that has been activated.

According to yet another aspect of the present invention, a mobile terminal unit configured to be foldable includes an antenna receiving a mail; a first display portion arranged so as to be located on an inner side of the mobile terminal unit when it is folded; a second display portion arranged so as to be located on an outer side of the mobile terminal unit when it is folded; a memory storing the received mail; a detecting portion detecting whether the mobile terminal unit is folded or not; and a control portion connected to the first display portion, the second display portion, the memory, and the detecting portion, and causing the stored mail to be displayed on any one of the first display portion and the second display portion.

The control portion outputs an instruction to display a title of the mail stored in the memory on the second display portion when a folded state of the mobile terminal unit is detected, and outputs an instruction to display the body of the mail stored in the memory on the first display portion when an unfolded state of the mobile terminal unit is detected while the title is being displayed on the second display portion.

Preferably, at least the title of the mail, the body of the mail, and control data indicating whether or not the mail has already been displayed are associated with one another, to be stored in the memory. Thus, the title or the body of the mail can be displayed on the first display portion or the second display portion, based on the control data.

Preferably, when the body of the mail is displayed, the control portion updates the control data to data indicating that the mail has already been displayed. In this manner, the mail that has already been displayed will not be displayed again.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing a configuration of a mobile phone as one embodiment of the present invention.
Figs. 2A and 2B are perspective views showing appearance of a mobile phone 100.
Fig. 3 illustrates display examples in one embodiment of the present invention.
Fig. 4 is a flowchart illustrating an operation example in one embodiment of the present invention.
Fig. 5 is a flowchart illustrating display examples in another embodiment of the present invention.
Fig. 6 illustrates a conventional art.
Fig. 7 illustrates a data structure stored in a memory in the embodiment of the present invention.

### DESCRIPTION OF THE PREFERRED EMBODIMENTS

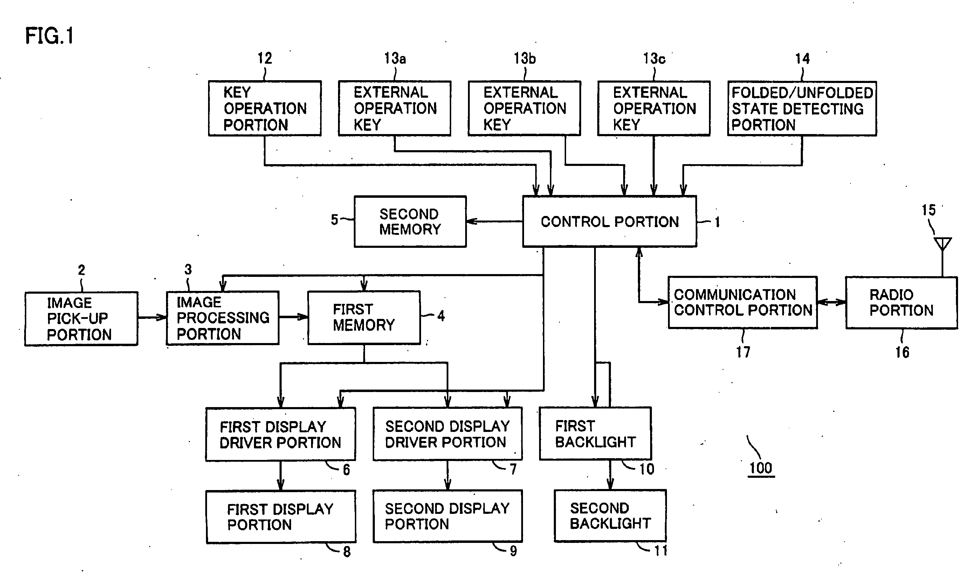

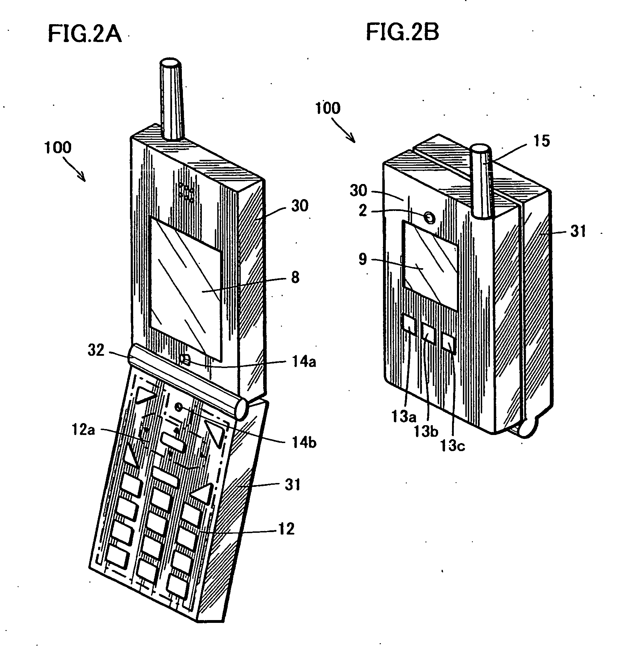

Fig. 1 is a block diagram showing a configuration of a mobile phone 100 in one embodiment of the present invention. Figs. 2A and 2B are perspective views showing appearance of mobile phone 100. Fig. 2A shows a state that mobile phone 100 is unfolded, while Fig. 2B shows a state that mobile phone 100 is folded. In the present embodiment, a mobile phone will be described as an example of a mobile terminal unit.

Mobile phone 100 conducts radio communication with a base station over radio wave, and transmits/receives text data, image data and the like in addition to voice data. As shown in Fig. 2A, mobile phone 100 is fabricated with first and second housings 30, 31, that are connected by a hinge 32. The housings can pivot around hinge 32 serving as an axis in a manner permitting an angular displacement, which will allow folding of mobile phone 100.

As shown in Fig. 1, mobile phone 100 includes a control portion 1, an image pick-up portion 2, an image processing portion 3, a first memory 4, a second memory 5, a first display driver portion 6, a second display driver portion 7, a first display portion 8, a second display portion 9, a first backlight 10, a second backlight 11, a key operation portion 12, external operation keys 13a, 13b, 13c, a folded/unfolded state detecting portion 14, an antenna 15, a radio portion 16, and a communication control portion 17.

Control portion 1 includes display control means, shutter button control means, and backlight control means, which control an operation of each part constituting mobile phone 100. Image pick-up portion 2 includes an image pick-up lens, an image pick-up device such as a CCD (Charge Coupled Device) image sensor or a CMOS (Complementary Metal Oxide Semiconductor) image sensor, and a three-color (RGB) filter. Image pick-up portion 2 separates light that has entered the image pick-up lens after reflected by a subject into light rays of three colors (RGB) through the color filter, and the light rays of three colors (RGB) are in turn converted into electrical signals respectively by the image pick-up device. As shown in Fig. 2B, image pick-up portion 2 is provided so as to be located on the outer side of mobile phone 100 when it is folded.

Image processing portion 3 includes an amplification portion, an A/D (analog/digital) conversion portion, and a signal processing portion. The amplification portion amplifies an electrical signal corresponding to RGB transmitted from image pick-up portion 2, and sends it to the A/D conversion portion. The A/D conversion portion converts the analog electrical signal corresponding to RGB amplified by the amplification portion to a digital signal, to output image data to the signal processing portion. The signal processing portion performs signal processing such as interpolation processing of pixels with respect to the image data sent from the A/D conversion portion. In addition, the signal processing portion sends the image data that was subjected to signal processing to first memory 4, based on a control signal transmitted from control portion 1. Image pick-up portion 2 and image processing portion 3 are image pick-up means for converting incident light into an electrical signal for output as image data. First memory 4 temporarily stores the image data transmitted successively from the signal processing portion. For example, first memory 4 temporarily stores the transmitted image data by erasing old image data, or by overwriting the old image data with the latest image data.

Control portion 1 transmits a control signal as well as the image data stored in first memory 4 to first and second display driver portions 6, 7. First and second display driver portions 6, 7 apply a driving voltage to each pixel electrode of first and second display portions 8, 9, in accordance with the image data to be displayed on first and second display portions 8, 9. First and second display portions 8, 9 are implemented as a liquid crystal display, EL (Electro Luminescence) display, or the like. First and second display portions 8, 9 are first and second display means for displaying an image based on the image data transmitted through first and second display driver portions 6, 7. As shown in Fig. 2A, first display portion 8 is arranged so as to be located on the inner side of mobile phone 100 when it is folded. As shown in Fig. 2B, second display portion 9 is arranged so as to be located on the outer side of mobile phone 100 when it is folded.

First and second backlights 10, 11 include a light-emitting device such as a light-emitting diode, and increase the brightness by irradiating first and second display portions 8, 9 with light. Control portion 1 controls on/off or adjusts brightness of first and second backlights 10, 11. In addition, first and second backlights 10, 11 can separately be controlled. When an image is displayed on first display portion 8, first backlight 10 is controlled so as to illuminate. On the other hand, when the image is displayed on second display portion 9, second backlight 11 is controlled so as to illuminate.

Key operation portion 12 is constituted with keys for entering numbers and characters, shutter button 12a, and the like. Shutter button 12a is operated by a user, when image data that the user wishes to store among image data successively transmitted to and temporarily stored in first memory 4 is to be stored in second memory 5. Shutter button 12a outputs an instruction signal to store the image data to control portion 1. Control portion 1 causes the image data stored in first memory 4 to be stored in second memory 5, in response to the instruction signal from shutter button 12a. Second memory 5 also serves as storage means for storing image data stored in first memory 4, and various reception data received via antenna 15.

In Fig. 2A, shutter button 12a may be implemented as a single-function key in key operation portion 12, or by sharing a key selected from those in key operation portion 12 for a function as the shutter button. Alternatively, shutter button 12a may separately be arranged in the vicinity of key operation portion 12, as illustrated. In addition to the configuration shown in Fig. 2A, the shutter button may also be implemented by any of external operation keys 13a, 13b, 13c arranged so as to be located on the outer side of mobile phone 100 when it is folded, for example, in the vicinity of second display portion 9, in photo-shooting mode.

Folded/unfolded state detecting portion 14 serves as means for detecting whether mobile phone 100 is folded or not. As shown in Fig. 2A, a small projection 14a is formed in the vicinity of hinge 32 in a lower portion of first housing 30. In addition, a small hole 14b is formed in the vicinity of hinge 32 in an upper portion of second housing 31. Inside hole 14b, a well-known open/close switch (not shown) is provided. Folded/unfolded state detecting portion 14 is constituted with projection 14a, hole 14b, and the switch.

Antenna 15 transmits/receives voice data, text data, image data, and the like in radio communication with a base station over radio wave. In reception, radio portion 16 demodulates data received via antenna 15 from the base station. In transmission, radio portion 16 modulates and amplifies the text data, the image data and the like transmitted from communication control portion 17, to transmit the data to the base station via antenna 15. Communication control portion 17 transmits the reception data such as the text data, the image data and the like demodulated by radio portion 16 to control portion 1, based on a prescribed communication protocol. The reception data received from a sender via radio portion 16 and communication control portion 17 is stored in second memory 5.

Image pick-up portion 2 is provided on the outer side of mobile phone 100 when it is folded. When the user of mobile phone 100 picks up an image of the subject except him/herself, the user does so by aiming image pick-up portion 2 at the subject which is on the side opposite to the user, with mobile phone 100 unfolded. In such a case, an unfolded state of mobile phone 100 is detected by folded/unfolded state detecting portion 14, and an instruction from shutter button 12a arranged on the inner side is regarded as valid. The user operates shutter button 12a on the inner side, arranged on the same side as first display portion 8, while viewing first display portion 8 serving as a finder.

Meanwhile, when the user picks up an image of him/herself, the user does so by aiming image pick-up portion 2 at him/herself with mobile phone 100 folded. In this case, a folded state of mobile phone 100 is detected by folded/unfolded state detecting portion 14, and an instruction, for example, from key 13b in the middle also serving as the external operation key, is regarded as valid. The user operates the shutter button arranged on the same side as second display portion 9, that is, external operation key 13b, while viewing second display portion 9 serving as a finder.

In this manner, instructions from first and second shutter buttons 12a, 13b located on the same side as first and second display portions 8, 9 respectively used as a finder are each regarded as valid, only by folding or unfolding mobile phone 100. Therefore, the user can operate the first or second shutter button while visually identifying the same, and hence, operability is improved.

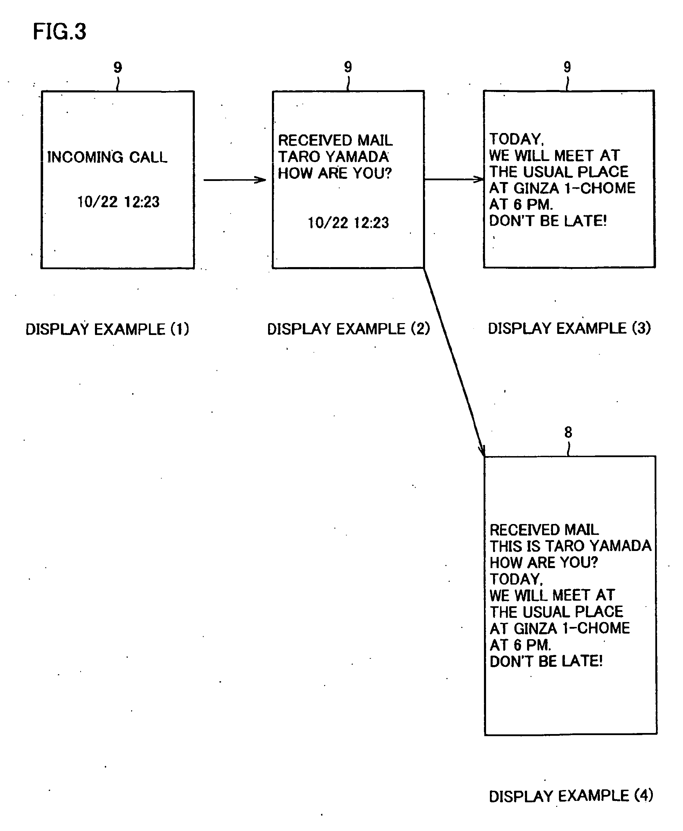

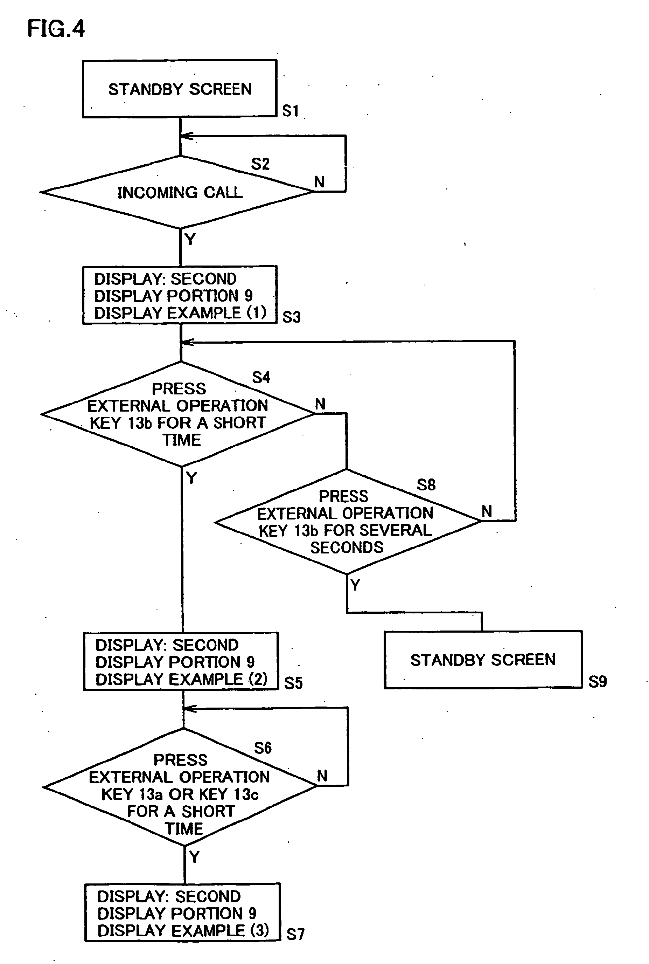

Fig. 3 illustrates display examples in second display portion 9 of mobile phone 100 when receiving a mail, while Fig. 4 is a flowchart illustrating an operation example.

When a mail is received while mobile phone 100 is folded, a display on second display portion 9 will vary from an arbitrary standby screen to an indication of reception (display example (1) in Fig. 3) (Fig. 4, S3). When external operation key 13b is operated here (Fig. 4, S4), preview of the mail with the sender's name and its title (display example (2) in Fig. 3) appears (Fig. 4, S5). Here, though transition from display example (1) to display example (2) in Fig. 3 has been set for privacy concerns, transition from the arbitrary standby screen (Fig. 4, S1) directly to the preview of the mail with the sender's name and its title (Fig. 4, S5) as shown in display example (2) in Fig. 3 may also be set.

In Fig. 2B, external operation keys 13a, 13c are set so as to function as a scroll key. Therefore, by operating any one of external operation keys 13a, 13c while the preview of the mail with the sender's name and its title is shown as illustrated in display example (2) in Fig. 3 (Fig. 4, S6), an instruction to display further the body of the mail in second display portion 9 can be issued. Display example (3) in Fig. 3 shows a display example in second display portion 9. If the user is satisfied simply with the display of the title, the user can return to the standby screen of second display portion 9 by operating external operation key 13b.

Here, if external operation key 13a or 13c with a function as a scroll key in S3 of Fig. 4 is pressed for several seconds, a mail received previously or a mail received subsequently can be selected for reading.

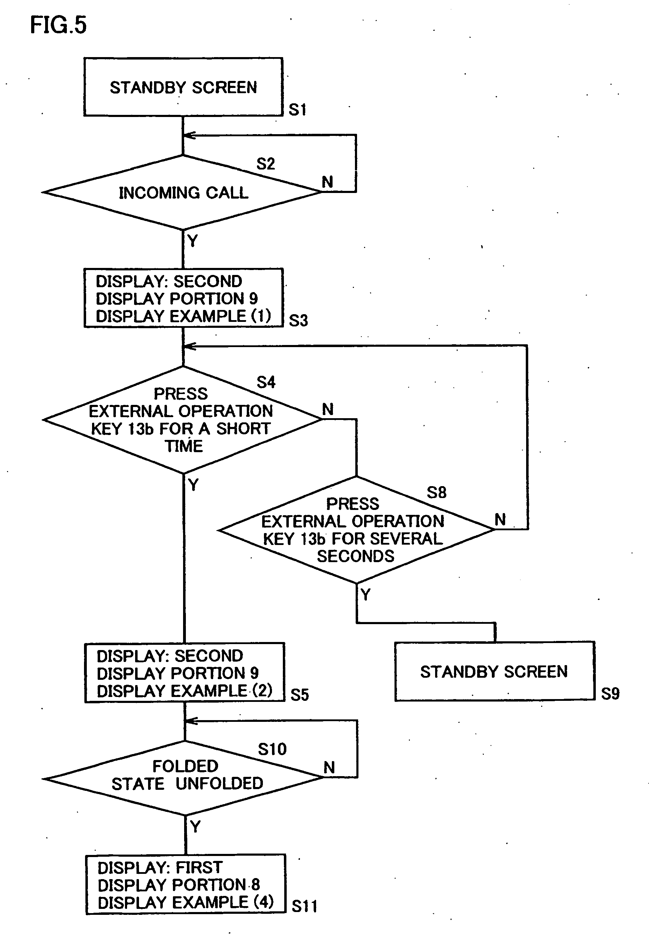

Fig. 5 is a flowchart illustrating another operation example. Fig. 5 shows a procedure in displaying a body of a mail in first display portion 8 provided on the inner side by unfolding a foldable mobile phone.

A procedure until the preview of the mail with the sender's name and its title (display example (2) in Fig. 3) is shown (S1 to S5 in Fig. 5) is similar to that in the example above. Therefore, description thereof will not be repeated. In this state, when the user unfolds the foldable mobile phone, folded/unfolded state detecting portion 14 detects an unfolded state (Fig. 5, S10), and the body of the mail is shown in first display portion 8 with a relatively large size (Fig. 5, S11).

Switching to display of the mail body can be attained by detecting the folded/unfolded state of mobile phone 100 in such a manner. Therefore, the user does not have to operate a button for switching. In other words, an operation for switching is obviated, and enhanced operability and usefulness are achieved.

In a mobile phone, the operations described in conjunction with Figs. 4 and 5 may be adopted separately or in combination.

Though Figs. 2A and 2B have shown an example in which first and second display portions 8, 9 are arranged in first housing 30, the present invention is not limited thereto. First and second display portions 8, 9 have only to be arranged on the inner side and the outer side of mobile phone 100 respectively when it is folded.

In addition, though mobile phone 100 has been described as an example of a mobile terminal unit in the present embodiment, the present invention is not limited thereto. For example, the present invention is applicable to such equipment as a notebook PC (personal computer) or a PDA (Personal Digital Assistant) that is configured to be foldable and includes image pick-up portions and display portions respectively on the inner side and the outer side thereof when folded.

As described above, according to the present invention, in a terminal unit showing an unread mail with its title in second display portion 9 located on the outer side thereof when folded, the user can view the body of the mail, following indication of an incoming mail with its title.

In addition, the present invention provides mobile equipment with which the user can view further detailed contents of a mail in second display portion 9 only by operating a scroll key arranged on the same side as second display portion 9, that is, the outer side of the mobile phone when it is folded. Furthermore, the present invention provides useful mobile equipment with which the user can view further detailed contents of a mail on inner, first display portion 8 with a relatively large size only by unfolding the mobile phone.

Though image pick-up portion 2 and second display portion 9 have been arranged on the identical plane in mobile phone 100 in the present embodiment of the present invention described above, those components may be arranged on different planes. For example, the image pick-up portion and the second display portion may be arranged so as to face opposite directions. In this manner, even when mobile phone 100 is folded, the user can take a picture of the subject with folded mobile phone 100, while visually identifying the subject in the second display portion.

In addition to the configuration of mobile phone 100 as described above, when mobile phone 100 is folded, control portion 1 may cause an image picked up by image pick-up portion 2 to be displayed on second display portion 9, and further, in response to reception of a mail, control portion 1 may cause indication of the mail reception to be displayed on second display portion 9. In this manner, while the user uses the image picked up by him/herself for display on second display portion 9, the user can also be informed of an incoming mail.

In addition to functions of control portion 1 described above, control portion 1 may attain at least one function among those described in the following.

First, when the image picked up by image pick-up portion 2 is displayed on second display portion 9, control portion 1 may cause image data from image pick-up portion 2 to be stored in memory 5, in response to an operation of an external operation key (13a to 13c). In this manner, the user can easily perform an operation for storing the image data while viewing the picked-up images.

Second, when indication of mail reception is being displayed on second display portion 9, control portion 1 may cause a body of the mail to be displayed on second display portion 9, in response to an operation of an external operation key (13a to 13c). In this manner, the user can be informed of mail reception with its title, with mobile phone 100 folded, that is, privacy being taken into account.

Third, the body of the mail may be displayed on second display portion 9 in response to an operation of external operation key 13a, 13b, 13c. In this manner, the user can view detailed contents of the mail on second display portion 9 with mobile phone 100 folded.

Fourth, when mobile phone 100 is unfolded while an unread mail is being displayed with mobile phone 100 folded, the body of the unread mail may be displayed on first display portion 8. In this manner, the user can view the body of the mail in first display portion 8 without an operation for displaying the body of the mail.

Fifth, while mobile phone 100 is unfolded, control portion 1 may cause the image picked up by image pick-up portion 2 to be displayed on first display portion 8. In this manner, if first display portion 8 has a size larger than that of second display portion 9, for example, the user can easily view the image.

Sixth, control portion 1 may activate shutter button 12a located on the inner side of mobile phone 100, when mobile phone 100 is unfolded; activate external operation keys 13a, 13b, 13c, when it is folded; and cause the image data from image pick-up portion 2 to be stored in memory 5 in response to an operation of shutter button 12a or external operation key 13a, 13b, 13c. In this manner, the user can reliably operate shutter button 12a or external operation key 13a, 13b, 13c while visually identifying the image. Consequently, operability of mobile phone 100 is improved.

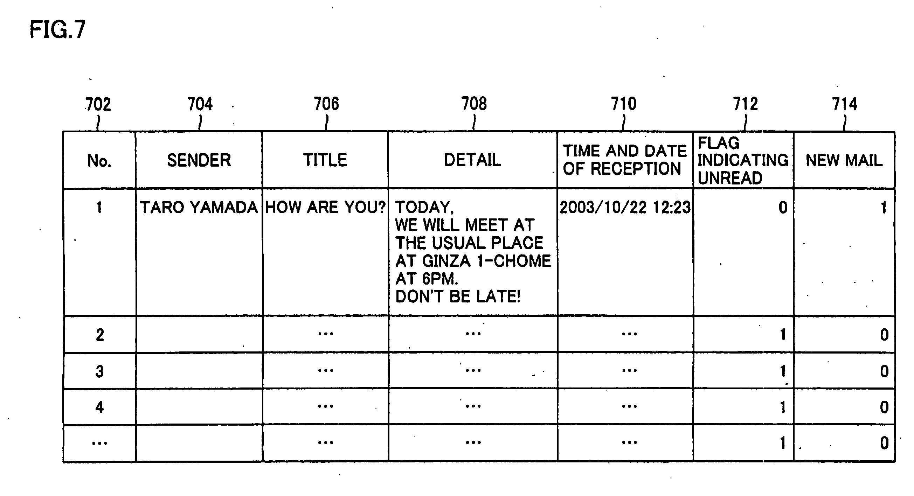

In addition, a structure shown below may be employed as a table structure stored in memory 5 of mobile phone 100. Fig. 7 shows a table structure of a received mail to be stored in memory 5. Such a table is controlled by control portion 1.

Referring to Fig. 7, a number for the received mail is stored in a field 702. The sender's name is stored in a field 704. The title of the received mail is stored in a field 706. The body of the received mail is stored in a field 708. Time and date of mail reception is stored in a field 710. A flag indicating whether the received mail has already been displayed or not is stored in a field 712. For example, when the mail has already been displayed, "1" is stored. On the other hand, if the mail has not yet been displayed, "0" is stored. Data indicating a new mail is stored in a field 714. This data indicates the order of displaying mails when a plurality of mails are received, for example. Such data is calculated, based on the time and data of reception, for example.

Such a table structure is held in memory 5, and each data is stored, associated with one another. Accordingly, mobile phone 100 can readily display the title and the body of the unread mail

In addition, when the body of the unread mail is displayed on mobile phone 100 with such a table structure, control portion 1 may cause memory 5 to store data indicating that the mail has already been displayed. For example, when a body of the mail numbered with "1" shown in Fig. 7 is displayed, control portion 1 changes the value for the flag stored in a field 712 from "0" to "1". In this manner, the body of the mail that has already been displayed will not be displayed again.

Although the present invention has been described and illustrated in detail, it is clearly understood that the same is by way of illustration and example only and is not to be taken by way of limitation, the scope of the present invention being limited only by the terms of the appended claims.

## Claims

1. A mobile terminal unit (100) configured to be foldable, comprising:
a first display portion (8) arranged so as to be located on an inner side of said mobile terminal unit when it is folded;
a second display portion (9) arranged so as to be located on an outer side of said mobile terminal unit when it is folded;
a detecting portion (14) configured and adapted for detecting whether said mobile terminal unit is folded or not;
an external operation key portion (13a to 13c);
a control portion (1); and
a key operation portion (12) arranged so as to be located on the inner side of said mobile terminal unit when it is folded,
**characterized by**
an image pick-up portion (2) provided on a plane where said second display portion is arranged, wherein
said external operation key portion (13a to 13c) is provided on said plane and is configured and adapted for allowing an operation to select a mail preceding or subsequent to a mail of which reception has been displayed on said second display portion so as to display a preview screen containing a title of the selected mail, and allowing an operation to instruct image pick-up by said image pick-up portion, said second display portion and said external operation key portion being arranged along a longitudinal direction of said mobile terminal unit, and said second display portion being configured and adapted for displaying characters with the bottom of said second display portion facing said external operation key portion,
said mobile terminal unit is configured and adapted such that, when said detecting portion detects the unfolded state of said mobile terminal unit, said key operation portion accepts an instruction to pick up an image, and
said mobile terminal unit is configured and adapted such that said control portion causes a body of said selected mail to be displayed on said first display portion when an unfolded state of said mobile terminal unit is detected by said detecting portion after said preview screen is displayed on said second display portion.

2. The mobile terminal unit according to claim 1, wherein
said external operation key portion and said key operation portion are implemented by a selection key configured and adapted for receiving an input of an instruction to select a mail of which body is to be displayed and a scroll key configured and adapted for receiving an input of an instruction to display the body of the mail, and
said mobile terminal unit is configured and adapted such that an operation to instruct image pick-up can be made through said selection key.

3. The mobile terminal unit according to claim 1, wherein
said second display portion is configured and adapted for displaying an image based on image data generated from an electrical signal output by said image pick-up portion.

4. The mobile terminal unit according to claim 1, further comprising:
a memory (5) connected to said control portion and configured and adapted for storing data, wherein
said mobile terminal unit is configured and adapted such that said control portion causes an image picked up by said image pick-up portion to be displayed on said second display portion while the folded state of said mobile terminal unit is detected, and causes data of said image to be stored in said memory in response to an operation of said external operation key portion while said image is being displayed on said second display portion.

5. The mobile terminal unit according to claim 1, wherein
said mobile terminal unit is configured and adapted such that said control portion causes an image picked up by said image pick-up portion to be displayed on said first display portion while the unfolded state of said mobile terminal unit is detected, and causes said image to be displayed on said second display portion while the folded state of said mobile terminal unit is detected.

6. The mobile terminal unit according to claim 1, wherein
said mobile terminal unit is configured and adapted such that said control portion, in response to reception of a mail, causes an indication of said reception to be displayed on said second display portion.

7. The mobile terminal unit according to claim 6, wherein
said mobile terminal unit is configured and adapted such that said control portion causes an unread mail with a title of said mail to be displayed on said second display portion in response to an operation of said external operation key portion while the indication of said reception is being displayed on said second display portion.

8. The mobile terminal unit according to claim 7, wherein
said mobile terminal unit is configured and adapted such that said control portion causes a body of said mail to be displayed on said second display portion in response to an operation of said external operation key portion while the unread mail with said title is being displayed on said second display portion.

9. The mobile terminal unit according to claim 7, wherein
said mobile terminal unit is configured and adapted such that said control portion causes a body of said mail to be displayed on said first display portion when said detecting portion detects that said mobile terminal unit is unfolded while the unread mail with said title is being displayed on said second display portion.

10. The mobile terminal unit according to claim 6, wherein
said mobile terminal unit is configured and adapted such that said control portion causes an image picked up by said image pick-up portion to be displayed on said first display portion when said detecting portion detects that said mobile terminal unit is unfolded.

11. The mobile terminal unit according to claim 10, further comprising:
a memory (5) connected to said control portion and configured and adapted for storing data, wherein
said key operation portion includes a shutter button (12a), and
said mobile terminal unit is configured and adapted such that said control portion activates said shutter button when said detecting portion detects an unfolded state of said mobile terminal unit, activates said external operation key when said detecting portion detects a folded state of said mobile terminal unit, and causes image data from said image pick-up portion to be stored in said memory in response to an operation of said shutter button or said external operation key portion that has been activated.

12. The mobile terminal unit according to claim 1, further comprising:
an antenna (15) configured and adapted for receiving a mail; and
a memory (5) configured and adapted for storing said mail received by said antenna; wherein
said mobile terminal unit is configured and adapted such that said control portion outputs an instruction to display a title of the mail stored in said memory on said second display portion when a folded state of said mobile terminal unit is detected, and outputs an instruction to display a body of the mail stored in said memory on said first display portion when an unfolded state of said mobile terminal unit is detected while said title is being displayed on said second display portion.

13. The mobile terminal unit according to claim 12, wherein
said mobile terminal unit is configured and adapted such that at least the title of said mail, the body of said mail, and control data indicating whether or not said mail has already been displayed are associated with one another, are stored in said memory.

14. The mobile terminal unit according to claim 13, wherein
said mobile terminal unit is configured and adapted such that, when the body of said mail is displayed, said control portion updates said control data to data indicating that said mail has already been displayed.

## Patentansprüche

1. Mobiles Endgerät (100), klappbar konfiguriert, umfassend:
einen ersten Anzeigeabschnitt (8), der so angeordnet ist, dass er sich auf einer inneren Seite des mobilen Endgeräts befindet, wenn es zugeklappt ist;
einen zweiten Anzeigeabschnitt (9), der so angeordnet ist, dass er sich auf einer äußeren Seite des mobilen Endgeräts befindet, wenn es zugeklappt ist;
einen Erfassungsabschnitt (14), konfiguriert und ausgelegt zum Erfassen, ob das mobile Endgerät zugeklappt ist oder nicht;
einen externen Bedientastenabschnitt (13a bis 13c);
einen Steuerabschnitt (1); und
einen Tastenbedienabschnitt (12), der so angeordnet ist, dass er sich auf der inneren Seite des mobilen Endgeräts befindet, wenn es zugeklappt ist,
**gekennzeichnet durch**
einen Bildaufnahmeabschnitt (12), der auf einer Ebene bereitgestellt ist, auf der der zweite Anzeigeabschnitt angeordnet ist, wobei
der externe Bedientastenabschnitt (13a bis 13c) auf der Ebene bereitgestellt ist und dazu konfiguriert und ausgelegt ist, einen Betriebsablauf zum Auswählen einer Nachricht vorangehend oder nachfolgend zu einer Nachricht zu erlauben, deren Empfang auf dem zweiten Anzeigeabschnitt angezeigt wurde, um einen einen Titel der ausgewählten Nachricht enthaltenden Vorschaubildschirm anzuzeigen, und einen Betriebsablauf zum Anweisen einer Bildaufnahme **durch** den Bildaufnahmeabschnitt zu erlauben, wobei der zweite Anzeigeabschnitt und der externe Bedientastenabschnitt entlang einer Längsrichtung des mobilen Endgeräts angeordnet sind, und der zweite Anzeigeabschnitt dazu konfiguriert und ausgelegt ist, Zeichen mit der Unterseite des zweiten Anzeigeabschnitts gegenüberliegend zu dem externen Bedientastenabschnitt anzuzeigen,
das mobile Endgerät derart konfiguriert und ausgelegt ist, dass dann, wenn der Erfassungsabschnitt den aufgeklappten Zustand des mobilen Endgeräts erfasst, der Tastenbedienabschnitt eine Anweisung zum Aufnehmen eines Bilds akzeptiert, und
das mobile Endgerät derart konfiguriert und ausgelegt ist, dass der Steuerabschnitt veranlasst, dass ein Körper der ausgewählten Nachricht auf dem ersten Anzeigeabschnitt angezeigt wird, wenn ein aufgeklappter Zustand des mobilen Endgeräts **durch** den Erfassungsabschnitt erfasst wird, nachdem der Vorschaubildschirm auf dem zweiten Anzeigeabschnitt angezeigt ist.

2. Mobiles Endgerät nach Anspruch 1, bei dem
der externe Bedientastenabschnitt und der Tastenbedienabschnitt mittels einer Auswahltaste, die zum Empfangen einer Eingabe einer Anweisung zum Auswählen einer Nachricht, deren Körper anzuzeigen ist, konfiguriert und ausgelegt ist, und einer Rolltaste, die zum Empfangen einer Eingabe einer Anweisung zum Anzeigen des Körpers der Nachricht konfiguriert und ausgelegt ist, implementiert sind, und
das mobile Endgerät derart konfiguriert und ausgelegt ist, dass ein Bedienvorgang zum Anweisen einer Bildaufnahme über die Auswahltaste durchgeführt werden kann.

3. Mobiles Endgerät nach Anspruch 1, bei dem
der zweite Anzeigeabschnitt zum Anzeigen eines Bilds auf der Grundlage von Bilddaten, die aus einem von dem Bildaufnahmeabschnitt ausgegebenen elektrischen Signal erzeugt wurden, konfiguriert und ausgelegt ist.

4. Mobiles Endgerät nach Anspruch 1, ferner umfassend:
einen Speicher (5), der mit dem Steuerabschnitt verbunden und zum Speichern von Daten konfiguriert und ausgelegt ist, wobei
das mobile Endgerät derart konfiguriert und ausgelegt ist, dass der Steuerabschnitt veranlasst, dass ein durch den Bildaufnahmeabschnitt aufgenommenes Bild auf dem zweiten Anzeigeabschnitt angezeigt wird, während der zugeklappte Zustand des mobilen Endgeräts erfasst wird, und veranlasst, dass Daten des Bilds in Antwort auf eine Bedienung des externen Bedientastenabschnitts in dem Speicher gespeichert werden, während das Bild auf dem zweiten Anzeigeabschnitt angezeigt wird.

5. Mobiles Endgerät nach Anspruch 1, bei dem
das mobile Endgerät derart konfiguriert und ausgelegt ist, dass der Steuerabschnitt veranlasst, dass ein durch den Bildaufnahmeabschnitt aufgenommenes Bild auf dem ersten Anzeigeabschnitt angezeigt wird, während der aufgeklappte Zustand erfasst wird, und veranlasst, dass das Bild auf dem zweiten Anzeigeabschnitt angezeigt wird, während der zugeklappte Zustand des mobilen Endgeräts erfasst wird.

6. Mobiles Endgerät nach Anspruch 1, bei dem
das mobile Endgerät derart konfiguriert und ausgelegt ist, dass der Steuerabschnitt in Antwort auf den Empfang einer Nachricht veranlasst, dass eine Anzeige des Empfangs auf dem zweiten Anzeigeabschnitt angezeigt wird.

7. Mobiles Endgerät nach Anspruch 6, bei dem
das mobile Endgerät derart konfiguriert und ausgelegt ist, dass der Steuerabschnitt veranlasst, dass in Antwort auf eine Bedienung des externen Bedientastenabschnitts eine ungelesene Nachricht mit einem Titel der Nachricht auf dem zweiten Anzeigeabschnitt angezeigt wird, während die Anzeige des Empfangs auf dem zweiten Anzeigeabschnitt angezeigt wird.

8. Mobiles Endgerät nach Anspruch 7, bei dem
das mobile Endgerät derart konfiguriert und ausgelegt ist, dass der Steuerabschnitt veranlasst, dass in Antwort auf eine Bedienung des externen Bedientastenabschnitts ein Körper der Nachricht auf dem zweiten Anzeigeabschnitt angezeigt wird, während die ungelesene Nachricht mit dem Titel auf dem zweiten Anzeigeabschnitt angezeigt wird.

9. Mobiles Endgerät nach Anspruch 7, bei dem
das mobile Endgerät derart konfiguriert und ausgelegt ist, dass der Steuerabschnitt veranlasst, dass ein Körper der Nachricht auf dem ersten Anzeigeabschnitt angezeigt wird, wenn der Erfassungsabschnitt erfasst, dass das mobile Endgerät aufgeklappt ist, während die ungelesene Nachricht mit dem Titel auf dem zweiten Anzeigeabschnitt angezeigt wird.

10. Mobiles Endgerät nach Anspruch 6, bei dem
das mobile Endgerät derart konfiguriert und ausgelegt ist, dass der Steuerabschnitt veranlasst, dass ein durch den Bildaufnahmeabschnitt aufgenommenes Bild auf dem ersten Anzeigeabschnitt angezeigt wird, wenn der Erfassungsabschnitt erfasst, dass das mobile Endgerät aufgeklappt ist.

11. Mobiles Endgerät nach Anspruch 10, ferner umfassend:
einen Speicher (5), der mit dem Steuerabschnitt verbunden und zum Speichern von Daten konfiguriert und ausgelegt ist, wobei
der Tastenbedienabschnitt einen Auslöser (12a) beinhaltet, und
das mobile Endgerät derart konfiguriert und ausgelegt ist, dass der Steuerabschnitt den Auslöser aktiviert, wenn der Erfassungsabschnitt einen aufgeklappten Zustand des mobilen Endgeräts erfasst, den externen Bedientastenabschnitt aktiviert, wenn der Erfassungsabschnitt einen zugeklappten Zustand des mobilen Endgeräts erfasst, und veranlasst, dass Bilddaten von dem Bildaufnahmeabschnitt in Antwort auf eine Bedienung des Auslösers oder des externen Bedientastenabschnitts, der aktiviert wurde, in dem Speicher gespeichert werden.

12. Mobiles Endgerät nach Anspruch 1, ferner umfassend:
eine Antenne (15), die zum Empfangen einer Nachricht konfiguriert und ausgelegt ist; und
einen Speicher (5), der zum Speichern der durch die Antenne empfangenen Nachricht konfiguriert und ausgelegt ist; wobei
das mobile Endgerät derart konfiguriert und ausgelegt ist, dass der Steuerabschnitt eine Anweisung zum Anzeigen eines Titels der in dem Speicher gespeicherten Nachricht auf dem zweiten Anzeigeabschnitt ausgibt, wenn ein zugeklappter Zustand des mobilen Endgeräts erfasst wird, und eine Anweisung zum Anzeigen eines Körpers der in dem Speicher gespeicherten Nachricht auf dem ersten Anzeigeabschnitt ausgibt, wenn ein aufgeklappter Zustand des mobilen Endgeräts erfasst wird, während der Titel auf dem zweiten Anzeigeabschnitt angezeigt wird.

13. Mobiles Endgerät nach Anspruch 12, bei dem
das mobile Endgerät derart konfiguriert und ausgelegt ist, dass zumindest der Titel der Nachricht, der Körper der Nachricht, und Steuerdaten, die anzeigen, ob die Nachricht bereits angezeigt worden ist oder nicht, in Zuordnung zu einander stehen und in dem Speicher gespeichert sind.

14. Mobiles Endgerät nach Anspruch 13, bei dem
das mobile Endgerät derart konfiguriert und ausgelegt ist, dass dann, wenn der Körper der Nachricht angezeigt wird, der Steuerabschnitt die Steuerdaten auf Daten, die anzeigen, dass die Nachricht bereits angezeigt worden ist, aktualisiert.

## Revendications

1. Terminal mobile (100) configuré pour être pliable, comprenant :
une première partie d'affichage (8) agencée de façon à être située sur un côté intérieur dudit terminal mobile lorsqu'il est plié ;
une deuxième partie d'affichage (9) agencée de façon à être située sur un côté extérieur dudit terminal mobile lorsqu'il est plié ;
une partie de détection (14) configurée et adaptée pour détecter si ledit terminal mobile est plié ou pas ;
une partie de touches de commande extérieures (13a à 13c) ;
une partie de commande (1) ; et
une partie de commande à touches (12) agencée de façon à être située sur le côté intérieur dudit terminal mobile lorsqu'il est plié,
**caractérisé par**
une partie de capture d'image (2) prévue sur un plan où ladite deuxième partie d'affichage est agencée, dans lequel
ladite partie de touches de commande extérieures (13a à 13c) est prévue sur ledit plan et est configurée et adaptée pour permettre une commande pour sélectionner un courrier précédant ou suivant un courrier dont la réception est affichée sur ladite deuxième partie d'affichage de façon à afficher un écran de prévisualisation contenant un titre du courrier sélectionné, et permettre une commande pour ordonner la capture d'image par ladite partie de capture d'image, ladite deuxième partie d'affichage et ladite partie de touches de commande extérieures étant agencées le long d'une direction longitudinale dudit terminal mobile, et ladite deuxième partie d'affichage étant configurée et adaptée pour afficher des caractères avec le bas de ladite deuxième partie d'affichage faisant face à ladite partie de touches de commande extérieures,
ledit terminal mobile est configuré et adapté pour que, lorsque ladite partie de détection détecte l'état déplié dudit terminal mobile, ladite partie de commande à touches accepte un ordre de capturer une image, et
ledit terminal mobile est configuré et adapté pour que ladite partie de commande affiche un corps dudit courrier sélectionné sur ladite première partie d'affichage lorsqu'un état déplié dudit terminal mobile est détecté par ladite partie de détection après que ledit écran de prévisualisation soit affiché sur ladite deuxième partie d'affichage.

2. Terminal mobile selon la revendication 1, dans lequel
ladite partie de touches de commande extérieures et ladite partie de commande à touches sont mises en oeuvre par une touche de sélection configurée et adaptée pour recevoir une saisie d'un ordre de sélectionner un courrier dont le corps doit être affiché et une touche de défilement configurée et adaptée pour recevoir une saisie d'un ordre d'afficher le corps du courrier, et
ledit terminal mobile est configuré et adapté pour qu'une commande pour ordonner la capture d'image puisse être effectuée au moyen de ladite touche de sélection.

3. Terminal mobile selon la revendication 1, dans lequel
ladite deuxième partie d'affichage est configurée et adaptée pour afficher une image sur la base de données d'image générées à partir d'un signal électrique délivré par ladite partie de capture d'image.

4. Terminal mobile selon la revendication 1, comprenant en outre :
une mémoire (5) connectée à ladite partie de commande et configurée et adaptée pour stocker des données, dans lequel
ledit terminal mobile est configuré et adapté de telle sorte que ladite partie de commande affiche une image capturée par ladite partie de capture d'image sur ladite deuxième partie d'affichage lorsque l'état plié dudit terminal mobile est détecté, et stocke des données de ladite image dans ladite mémoire en réponse à une commande de ladite partie de touches de commande extérieures pendant que ladite image est affichée sur ladite deuxième partie d'affichage.

5. Terminal mobile selon la revendication 1, dans lequel
ledit terminal mobile est configuré et adapté de telle sorte que ladite partie de commande affiche une image capturée par ladite partie de capture d'image sur ladite première partie d'affichage lorsque l'état déplié dudit terminal mobile est détecté, et affiche ladite image sur ladite deuxième partie d'affichage lorsque l'état plié dudit terminal mobile est détecté.

6. Terminal mobile selon la revendication 1, dans lequel
ledit terminal mobile est configuré et adapté de telle sorte que ladite partie de commande, en réponse à la réception d'un courrier, affiche une indication de ladite réception sur ladite deuxième partie d'affichage.

7. Terminal mobile selon la revendication 6, dans lequel
ledit terminal mobile est configuré et adapté de telle sorte que ladite partie de commande affiche un courrier non lu avec un titre dudit courrier sur ladite deuxième partie d'affichage en réponse à une commande de ladite partie de touches de commande extérieures pendant que l'indication de ladite réception est affichée sur ladite deuxième partie d'affichage.

8. Terminal mobile selon la revendication 7, dans lequel
ledit terminal mobile est configuré et adapté de telle sorte que ladite partie de commande affiche un corps dudit courrier sur ladite deuxième partie d'affichage en réponse à une commande de ladite partie de touches de commande extérieures lorsque le courrier non lu avec ledit titre est affiché sur ladite deuxième partie d'affichage.

9. Terminal mobile selon la revendication 7, dans lequel
ledit terminal mobile est configuré et adapté de telle sorte que ladite partie de commande affiche un corps dudit courrier sur ladite première partie d'affichage lorsque ladite partie de détection détecte que ledit terminal mobile est déplié pendant que le courrier non lu avec ledit titre est affiché sur ladite deuxième partie d'affichage.

10. Terminal mobile selon la revendication 6, dans lequel
ledit terminal mobile est configuré et adapté de telle sorte que ladite partie de commande affiche une image capturée par ladite partie de capture d'image sur ladite première partie d'affichage lorsque ladite partie de détection détecte que ledit terminal mobile est déplié.

11. Terminal mobile selon la revendication 10, comprenant en outre :
une mémoire (5) connectée à ladite partie de commande et configurée et adaptée pour stocker des données, dans lequel
ladite partie de commande à touches comprend un déclencheur (12a), et
ledit terminal mobile est configuré et adapté pour que ladite partie de commande active ledit déclencheur lorsque ladite partie de détection détecte un état déplié dudit terminal mobile, active ladite partie de touches de commande extérieures lorsque ladite partie de détection détecte un état plié dudit terminal mobile, et stocke des données d'image de ladite partie de capture d'image dans ladite mémoire en réponse à une commande dudit déclencheur ou de ladite partie de touches de commande extérieures qui a été activé(e).

12. Terminal mobile selon la revendication 1, comprenant en outre :
une antenne (15) configurée et adaptée pour recevoir un courrier ; et
une mémoire (5) configurée et adaptée pour stocker ledit courrier reçu par ladite antenne ; dans lequel
ledit terminal mobile est configuré et adapté pour que ladite partie de commande délivre un ordre d'afficher un titre du courrier stocké dans ladite mémoire sur ladite deuxième partie d'affichage lorsqu'un état plié dudit terminal mobile est détecté, et délivre un ordre d'afficher un corps du courrier stocké dans ladite mémoire sur ladite première partie d'affichage lorsqu'un état déplié dudit terminal mobile est détecté pendant que ledit titre est affiché sur ladite deuxième partie d'affichage.

13. Terminal mobile selon la revendication 12, dans lequel
ledit terminal mobile est configuré et adapté de telle sorte qu'au moins le titre dudit courrier, le corps dudit courrier et les données de commande indiquant si ledit courrier a déjà été affiché ou pas sont associés les uns aux autres, pour être stockés dans ladite mémoire.

14. Terminal mobile selon la revendication 13, dans lequel
ledit terminal mobile est configuré et adapté de telle sorte que, lorsque le corps dudit courrier est affiché, ladite partie de commande met à jour lesdites données de commande en données indiquant que ledit courrier a déjà été affiché.
